# FASCICULE DE BREVET EUROPEEN

(11) **EP 0 500 412 B1**
(45) Date de publication et mention de la délivrance du brevet: **28.12.1994**
(21) Numéro de dépôt: 92400321.3
(22) Date de dépôt: 07.02.1992
(51) Int. Cl.: B60N 2/36

(54) **Siège amovible de véhicule**
Herausnehmbarer Fahrzeugsitz
Removable vehicle seat

(30) Priorité: 21.02.1991 FR 9102051
(43) Date de publication de la demande: 26.08.1992
(73) Titulaire: AUTOMOBILES PEUGEOT, 75116 Paris (FR); AUTOMOBILES CITROEN, 92200 Neuilly-sur-Seine (FR); BERTRAND FAURE AUTOMOBILE "B.F.A.", F-91300 Massy (FR)
(72) Inventeur: Joudoux, Gérard, F-95240 Cormeilles en Parisis (FR); Gallienne, Didier, F-61100 Landigou (FR)
(74) Mandataire: Fabien, Henri

(56) Documents cités:
- EP-A- 0 397 333
- DE-A- 3 726 711
- US-A- 4 836 597

## Description

L'invention est relative à un siège amovible de véhicule, immobilisable alternativement en position normale d'utilisation et en position relevée de dégagement obtenue par basculement vers l'avant, notamment après rabattement du dossier sur l'assise. Un siège du type défini dans le préambule de la revendication 1 est connu du document US-A-4 836 597

Un tel siège comporte généralement sous l'armature de l'assise, pour la relier au plancher du véhicule, des moyens d'accrochage à l'arrière et des moyens dégageables de pivotement autour d'un axe transversal à l'avant.

Ces derniers comprennent soit deux doigts de l'armature engagés dans des ouvertures appropriées du plancher ou d'une pièce qui y est fixée, soit deux encoches inférieures de l'armature engagées chacune sur une tige transversale fixée au plancher. Pour assurer le maintien de ces encoches sur les tiges et permettre leur dégagement pour extraire le siège du véhicule, un dispositif de verrouillage est de préférence agencé sur l'armature, avec deux verrous respectivement associés aux deux encoches et actionnables par des organes de manoeuvre. Ces organes, parfois compliqués et peu accessibles, s'ajoutant aux moyens d'accrochage arrière, le siège s'avère relativement couteux et son extraction du véhicule implique une manoeuvre peu aisée du déverrouillage des moyens de pivotement.

Le but de l'invention est de remédier à ces inconvénients et de réaliser de façon simple un siège basculable de véhicule, qui soit verrouillable dans ses positions d'utilisation et de dégagement et aisément extractible du véhicule.

L'invention concerne donc un siège de véhicule dont l'armature d'assise comporte à l'arrière des moyens d'accrochage sur le plancher du véhicule pour son maintien en position d'utilisation, et à l'avant deux encoches inférieures engageables respectivement sur deux tiges fixées au plancher en formant un axe transversal de basculement du siège entre sa position d'utilisation et une position relevée dégageant le plancher, un verrou pivotant sur l'armature et adjacent à chaque encoche étant susceptible de maintenir au fond de celle-ci la tige correspondante.
Selon l'invention chaque verrou comporte, au-dessous de son axe de pivotement et propres à recevoir la tige correspondante, une lumière en arc de cercle centré sur cette axe et une encoche inférieure débouchant au milieu de la lumière, de sorte que la tige se trouve prisonnière dans l'une ou l'autre des extrémités de cette lumière quand le siège est en position d'utilisation ou en position relevée, et est susceptible de passer simultanément par les encoches du verrou et de l'armature placées en vis-à-vis quand le siège est en position inclinée entre les deux position précitées.

Le siège comporte de préférence des moyens d'immobilisation en rotation des verrous par rapport au plancher quand le siège bascule.

Selon un premier mode de réalisation, ces moyens d'immobilisation comprennent deux extensions de chaque verrou qui butent sur une partie solidaire du plancher, respectivement en avant et en arrière de l'axe de pivotement

Ces deux extensions sont par exemple transversales et butent chacune sur un bord supérieur d'une pièce supportant la tige; ou bien le verrou comporte deux extensions inférieures butant sur le fond d'une pièce supportant la tige.

Selon un second mode de réalisation, Les moyens d'immobilisation comprennent une extension du verrou située en arrière de l'axe de pivotement et maintenue en appui sur une partie solidaire du plancher par un ressort reliant le verrou et l'armature;

Dans ce dernier mode une agrafe est de préférence fixée à l'armature près de chaque encoche de celle-ci pour coopèrer avec la tige correspondante de manière à assurer son maintien au fond de cette encoche quand le siège repose sur le plancher, tout en permettant son passage dans celle-ci par déformation élastique de l'agrafe;

Selon une autre caractéristique de l'invention, l'armature et chaque verrou comportent des moyens de limitation du pivotement du verrou à deux positions proches de celles qu'il occupe, par rapport à l'armature,quand le siège est respectivement en position d'utilisation et en position relevée;

Ces moyens de limitation du pivotement du verrou sont par exemple constitués d'un doigt transversal solidaire de ce dernier, engagé dans une ouverture pratiquée dans un flasque de l'armature auquel est fixé l'axe de pivotement du verrou; ils peuvent aussi être constitués de deux bords supérieurs du verrou propres à buter contre deux rebords d'un flasque de l'armature auquel est fixé l'axe de pivotement du verrou.

D'autres caractéristiques de l'invention apparaissent dans la description donnée ci-après, à titre d'exemples, de deux modes de réalisation de sièges amovibles, avec référence aux dessins annexés dans lesquels :
- la Fig.1 représente, vue de coté en coupe suivant II-II de la Fig.2, la partie inférieure d'un siège de véhicule en position d'utilisation;
- la Fig. 2 est une vue en coupe suivant I-I de la Fig. 1;
- Les Fig.3 et 4 sont des vues partielles de coté du siège de la Fig.1, respectivement en position de montage ou d'extraction et en position relevée de dégagement;
- La Fig.5 est une vue partielle de coté d'une variante de réalisation;
- La Fig 6 représente, de façon analogue à la Fig.1, et en coupe suivant VI-VI de la Fig.7, un siège selon un autre mode de réalisation ;
- La Fig.7 est une coupe suivant VII-VII de la Fig.6;
- Les Fig.8a et 8b montrent, de coté, ce dernier siège en position de montage ou d'extraction, respectivement écarté du plancher et en place sur celui-ci;
- La Fig.9 est une vue de coté de ce dernier siège en position relevée.

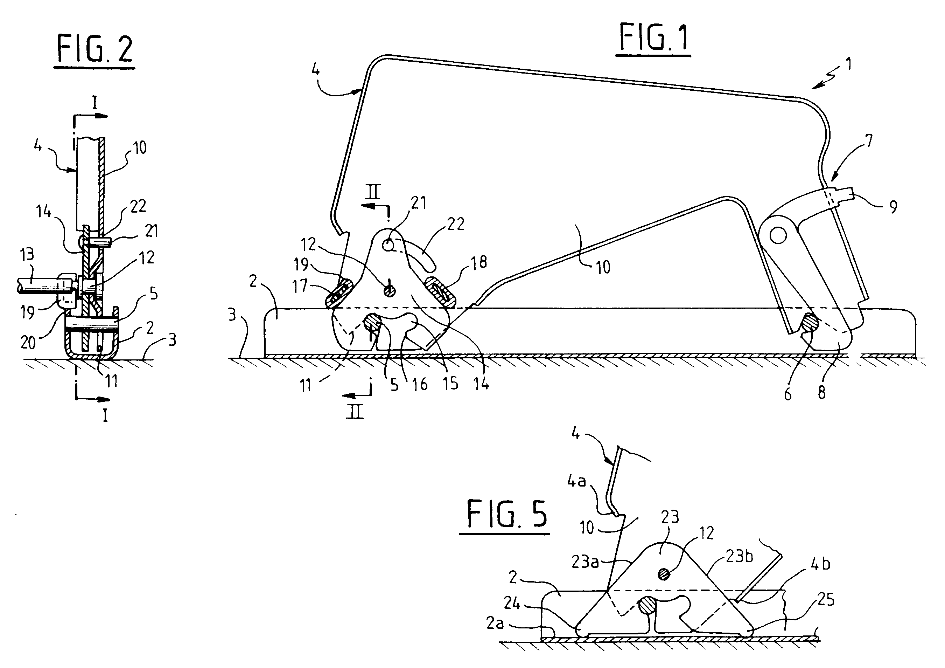

- Les Fig 1 et 2 montrent la partie inférieure d'un siège 1 porté par deux rails longitudinaux 2, dont un seul est représenté, fixés sur un plancher 3 de véhicule. L'armature d'assise 4 du siège repose sur deux tiges transversales 5,6 fixées à chaque rail.
La partie arrière de l'armature comporte un moyen d'accrochage usuel 7 à crochet 8 coopérant avec chaque tige 6 et actionnable par un levier 9.
A l'extrémité avant inférieure de chacun des deux flasques latéraux verticaux 10 de l'armature, est pratiquée une encoche 11 qui forme un V renversé et dont le fond arrondi reçoit l'une des deux tiges 5. Celles-ci sont alignées et constituent un axe transversal de basculement pour le siège.

Au dessus de cette encoche 11, un axe transversal 12 fixé au flasque 10 et relié à un axe analogue sur l'autre flasque (non représenté) par une traverse tubulaire 13 sert de pivot pour un verrou plat 14 parallèle et adjacent à chaque flasque. Ce verrou comporte au-dessous de l'axe 12 une lumière 15 en arc de cercle centré sur cet axe et une encoche inférieure 16 débouchant au milieu de la lumière. Celle -ci et l'encoche 16 sont légèrement plus larges que le diamètre de la tige 5 pour que celle-ci puisse s'y déplacer avec un faible jeu, et l'encoche a une forme avasée vers l'extérieur pour faciliter son engagement sur la tige.

Deux extensions transversales 17, 18 du verrrou, recouvertes chacune d'un capuchon protecteur 19 en matière plastique dure, sont au contact d'un bord supérieur 20 du rail, respectivement en avan et en arrière de l'axe 12. Le verrou est ainsi immobilisé en rotation par rapport au plancher tant que l'armature repose, par ses deux encoches 11, sur les deux tiges 5.

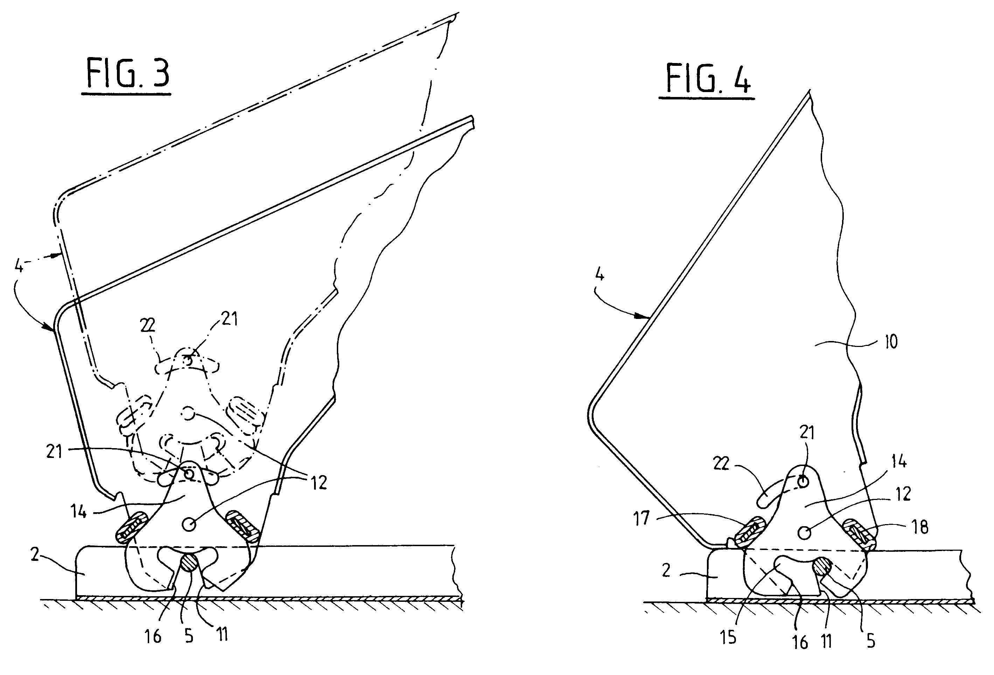

Un doigt transversal 21 fixé au verrou est engagé dans une ouverture 22 pratiquée dans le flasque 10 et formant un arc de cercle centré sur l'axe 12, de manière à limiter le pivotement du verrou quand le siège est entière écarté du plancher, comme visible en traits interrompus à la Fig.3 . On notera que le verrou est sensiblement symétrique par rapport à un plan transversal passant par l'axe 12 et par le doigt 21.

Quand le siège est en position d'utilisation (Fig.1), l'encoche 11 de l'armature est en avant de celle (16) du verrou, de sorte que la tige 5 est emprisonnée au fond de l'encoche 11 et dans l'extrémité avant de la lumière 15. Tant que le crochet 8 est en place sur la tige 6, le siège est immobilisé dans cette position, aussi bien à l'avant qu'à l'arrière.

En dégageant le crochet 8 grâce au levier 9, l'arrrière du siège peut être soulevé en faisant basculer l'armature 4 sur les deux tiges 5 jusqu'à la position relevée (Fig.4) où l'assise du siège est à peu près verticale et le plancher dégagé au droit des parties arrière et centrale des rails. Pendant ce basculement du siège vers l'avant, chaque verrou 14 est resté sensiblement immobile en rotation grâce à l'appui des extensions 17, 18 sur le rail associé, et le basculement de l'armature autour de la tige 5 a fait avancer l'axe 12 du verrou et reculer l'encoche 11 du flasque 10, de sorte que dans cette position relevée du siège la tige se trouve emprisonnée dans le fond de l'encoche 11 et dans l'extrémité arrière la lumière 15. Le verrouillage du siège est ainsi encore assuré.

Dans la position inclinée intermédiaire représentée en traits plein à la Fig.3, l'axe 12 est sensiblement à la verticale de la tige 5, ainsi que les deux encoches 11 et 16 de l'armature et du verrou. Ces deux encoches étant en vis-à-vis, la tige 5 n'est plus prisonnière et le siège peut être soulevé entièrement, la tige passant simultanément dans les deux encoches, puis extrait du véhicule.

La remise en place du siège s'effectue en le présentant en position inclinée au-dessus des tiges 5, comme visible en traits mixtes à la Fig.3 . Chaque verrou 14 peut alors osciller autour de son axe 12, de façon limitée par le doigt 21 dans l'ouverture 22 du flasque. La dimension de cette ouverture est telle que le verrou peut pivoter, par rapport à l'armature 4, de l'une à l'autre des positions qu'il occupe quand le siège est respectivement en position d'utilisation et en position relevée. Le centre de gravité du verrou se trouvant entre son axe 12 et son encoche 16, celle-ci se situe au-dessous de cet axe quand le siège est entièrement écarté du plancher, ainsi que l'encoche 11 du flasque 10, quand le siège est incliné à peu près comme à la Fig.3. Les deux encoches 11, 16 sont ainsi en vis-à-vis et peuvent être engagées verticalement sur la tige 5 correspondante, comme représenté en traits pleins sur cette figure. Cet engagement est facilité par la forme évasée vers le bas des deux encoches.

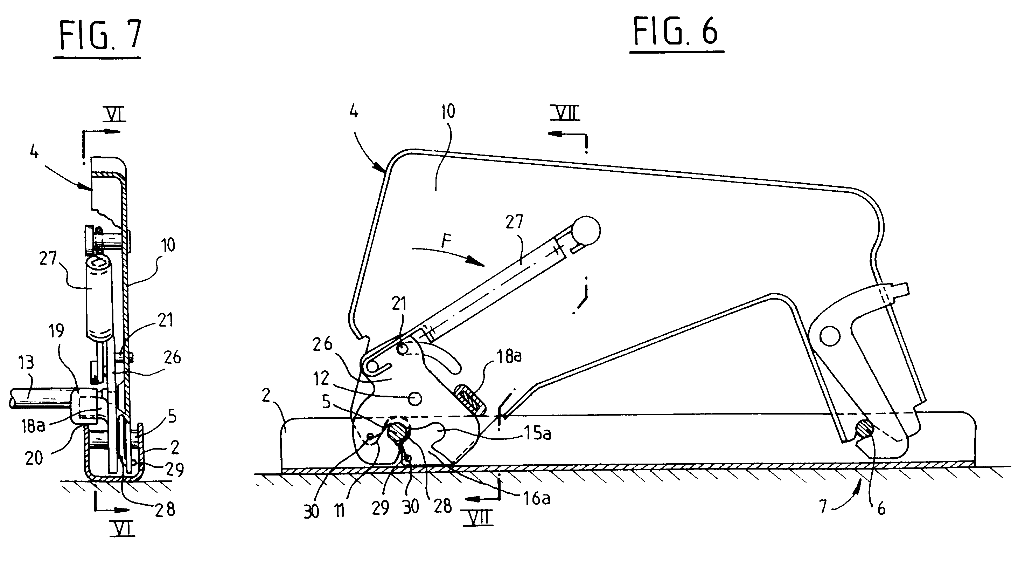

Selon la variante de la Fig.5, le verrou 23 comporte deux extensions inférieures 24 et 25 butant sur le fond 2a du rail, respectivement en avant et en arrière de l'axe 12, et les moyens de limitation du pivotement du verrou sont constitués par les bords supérieurs 23a, 23b de celui-ci susceptibles de buter, quand le siège est écarté entièrement du plancher, sur des rebords inférieurs 4a, 4b du flasque 10.

Dans le mode de réalisation des Fig.6 à 9, le verrou 26 comporte une seule extension transversale 18a butant sur le rail 2 en arrière de son axe de pivotement 12 et un doigt transversal 21 identique à celui du verrou 14 décrit plus haut.
Un ressort de traction 27 est accroché à l'armature 4 et au verrou 26 de manière telle qu'il tend à faire tourner celui-ci dans le sens F correspondant à la mise en appui de son extension 18a sur le rail 2. Le verrou est ainsi immobilisé en rotation par rapport au plancher tant que le siège repose par ses encoches 11 sur les tiges 5.
Chaque verrou 26 comporte une lumière 15a et une encoche 16a identiques à celles (15,16) des verrous 14 et 23 précédents, de sorte que le verrouillage et le déverrouillage des tiges 5 dans les encoches 11 s'effectuent de la même manière que dans le premier mode de réalisation.

Du fait de l'immobilité en rotation du verrou 26 par rapport au plancher, le ressort 27 agit sur l'armature 4 dans le sens inverse de F. Si ce ressort est prévu pour exercer une force relativement importante, il assiste le mouvement de basculement du siège vers l'avant et donc de soulèvement de l'arrière du siège après dégagement du crochet 8 .

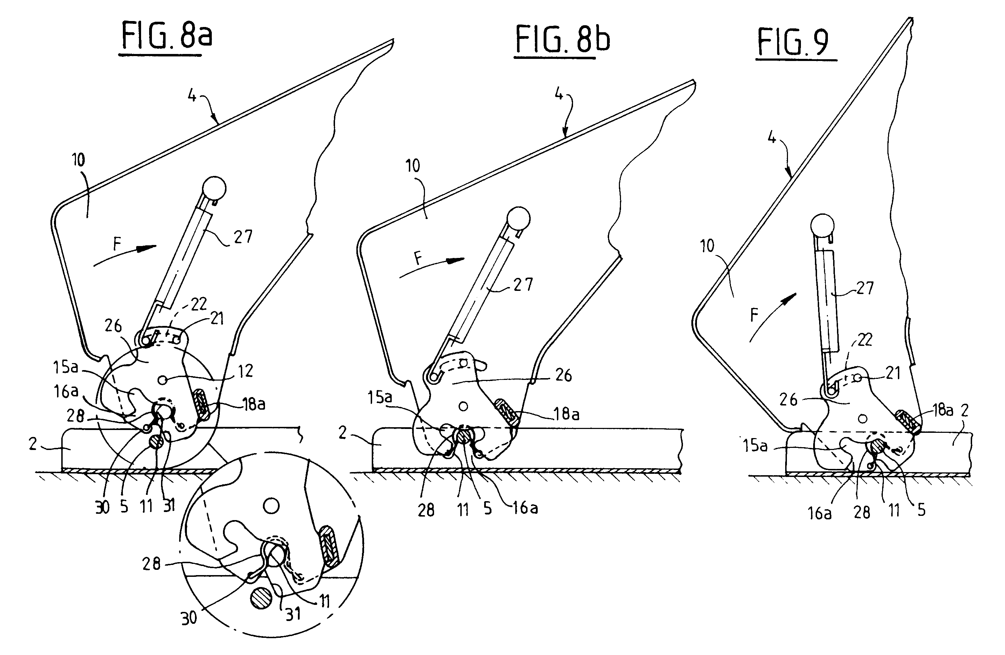

Pour assurer le maintien de la tige 5 au fond de l'encoche 11 et dans la lumière 15a lorsque le siège est dans la position inclinée de la Fig.8b, dans le cas où le ressort exerce une force assez importante pour soulever le verrou, et par suite son axe 12 et l'armature 4, par pivotement autour du point de contact entre l'extension 18a et le rail 2, une agrafe 28 fixée au flasque 10 près de l'encoche 11 est agencée pour maintenir la tige 5 au fond de cette encoche tout en permettant son passage dans celle-ci, par déformation élastique de l'agrafe, lors de la mise en place et lors de l'extraction du siège.
Cette agrafe, logée entre le flasque 10 et le verrou 26, est constituée d'une pince en fil d'acier à ressort formant un C propre à entourer partiellement la tige 5 et comportant deux branches s'écartant vers leurs extrémités 29 qui sont pliées et engagées dans deux trous 30 du flasque situés près des deux bords de l'encoche 11.

Quand l'avant du siège est écarté du plancher (Fig.8a), le verrou 26 tiré par le ressort 27 prend la position déterminée par mise en contact du doigt 21 du verrou contre l'extrémité arrière de l'ouverture 22 du flasque 10. Cette position est sensiblement la même que celle qu'occupe le verrou, par rapport à l'armature 4, quand le siège est en position relevée.(Fig 9).

Lors de la mise en place du siège (Fig.8a), l'armature étant en positon inclinée et l'encoche 11 étant présentée au-dessus de la tige 5, celle-ci entre en contact avec la partie arrrière inférieure du verrou 26, sur une rampe 31 formant le bord arrière de l'encoche 16a. Cette rampe est inclinée vers le bas et vers l'arrière, de sorte que sous le poids du siège le verrou pivote dans le sens inverse de F, en tendant le ressort 27. La rampe 31 présente une légère courbure à concavité tournée vers l'avant pour faciliter l'introduction de la tige 5 dans l'encoche 16a et l'amorce du pivotement du verrou dans le sens inverse de F.

Quand l'encoche 16a arrive en vis-à-vis de l'encoche 11 du flasque, l'avant du siège descend, avec engagement de la tige 5 jusqu'au fond de l'encoche 11 et dans le centre de la lumière 15a, comme visible à la Fig.8b, cette descente étant assurée par le poids du siège et éventuellement avec l'aide d'une poussée manuelle exercée vers le bas sur le siège pour provoquer la déformation élastique de l'agrafe 28.

Dans ce dernier mode de réalisation, l'effort de soulèvement de l'arrière du siège, au début du basculement vers l'avant, est amoindri grâce à l'effet d'assistance dû au ressort 27, et l'extraction du siège s'effectue, comme dans la première disposition décrite, en l'amenant seulement en position inclinée, ce qui provoque le déverrouillage automatique des moyens de pivotement avant, et ce qui facilite la préhension du siège pour l'extraire du véhicule.

## Revendications

1. Siège de véhicule, dont l'armature d'assise (4) comporte à l'arrière des moyens (7) d'accrochage sur le plancher du véhicule pour son maintien en position d'utilisation, et à l'avant deux encoches inférieures (11) engageables respectivement sur deux tiges (5) fixées au plancher en formant un axe transversal de basculement du siège entre sa position d'utilisation et une position relevée dégageant le plancher, un verrou (14) pivotant sur l'armature et adjacent à chaque encoche étant susceptible de maintenir au fond de celle-ci la tige correspondante, caractérisé en ce que chaque verrou (14;23;26)comporte, au-dessous de son axe de pivotement (12) et propres à recevoir la tige (5) correspondante, une lumière (15, 15a) en arc de cercle centré sur cette axe (12) et une encoche inférieure (16; 16a) débouchant au milieu de la lumière, de sorte que la tige se trouve prisonnière dans l'une ou l'autre des extrémités de cette lumière quand le siège est en position d'utilisation ou en position relevée, et est susceptible de passer simultanément par les encoches (16,11) du verrou et de l'armature placées en vis-à-vis quand le siège est en position inclinée entre les deux positions précitées.

2. Siège selon la revendication 1 caractérisé en ce qu'il comporte des moyens (17, 18; 18a, 27, 28) d'immobilisation en rotation des verrous (14; 23; 26) par rapport au plancher quand le siège bascule.

3. Siège selon la revendication 2 caractérisé en ce que les moyens d'immobilisation comprennent deux extensions (17, 18; 24, 25) de chaque verrou (14;23) qui butent sur une partie (20;2a) solidaire du plancher, respectivement en avant et en arrière de l'axe de pivotement (12).

4. Siège selon la revendication 3 caractérisé en ce que les deux extensions (17,18) sont transversales et butent chacune sur un bord supérieur (20) d'une pièce (2) supportant la tige (5).

5. Siège selon la revendication 3 caractérisé en ce que le verrou (23) comporte deux extensions inférieures (24,25) butant sur le fond (2a) d'une pièce (2) supportant la tige (5).

6. Siège selon la revendication 2 caractérisé en ce que les moyens d'immobilisation comprennent une extension (18a) du verrou (26) située en arrière de l'axe de pivotement (12) et maintenue en appui sur une partie (20) solidaire du plancher par un ressort (27) reliant le verrou et l'armature (4).

7. Siège selon la revendication 6 caractérisé en ce qu'une agrafe (28) fixée à l'armature (4) près de chaque encoche (11) de celle-ci coopère avec la tige (5) correspondante de manière à assurer son maintien au fond de cette encoche quand le siège repose sur le plancher, tout en permettant son passage dans celle-ci par déformation élastique de l'agrafe.

8. Siège selon l'une quelconque des revendications précédentes caractérisé en ce que l'armature (4) et chaque verrou (14; 23; 26) comportent des moyens (21, 22; 23a, 23b, 4a, 4b) de limitation du pivotement du verrou à deux positions proches de celles qu'il occupe par rapport à l'armature, quand le siège est respectivement en position d'utilisation et en position relevée.

9. Siège selon la revendication 8 caractérisé en ce que les moyens de limitation du pivotement du verrou (14,26) sont constitués d'un doigt transversal (21) solidaire de ce dernier, engagé dans une ouverture pratiquée dans un flasque (10) de l'armature (4) auquel est fixé l'axe (12) de pivotement du verrou.

10. Siège selon la revendication 8 caractérisé en, ce que les moyens de limitation du pivotement du verrou (23), sont constitués de deux bords supérieurs (23a, 23b) de ce dernier propres à buter contre deux rebords (4a, 4b) d'un flasque (10) de l'armature auquel est fixé l'axe (12) de pivotement du verrou.

## Claims

1. A vehicle seat, the seating frame (4) of which comprises, at the rear, means (7) for hooking to the floor of the vehicle in order to hold it in the usage position, and, at the front, two lower recesses (11) that can be engaged respectively on two rods (5) fastened to the floor and forming a transverse axis for tilting the seat between its usage position and a raised position clearing the floor, a latch (14) pivoting on the frame and adjacent to each recess being capable of holding the corresponding rod at the bottom of said recess, characterised in that each latch (14; 23; 26) comprises, below its axis of pivoting (12) and suitable for receiving the corresponding rod (5), a slot (15, 15a) in the shape of an arc of a circle centred around this axis (12) and a lower recess (16; 16a) opening into the middle of the slot, such that the rod is captured in one or other of the ends of this slot when the seat is in the usage position or in the raised position, and is capable of passing simultaneously through the recesses (16, 11) of the latch and of the frame which are positioned side by side when the seat is in the inclined position between the two aforementioned positions.

2. A seat according to Claim 1 characterised in that it comprises means (17, 18; 18a, 27, 28) for fixing the latches (14; 23; 26) in rotation relative to the floor when the seat tilts.

3. A seat according to Claim 2 characterised in that the fixing means comprise two extensions (17, 18; 24, 25) for each latch (14, 23) which abut on a portion (20; 2a) integral with the floor, respectively in front of and behind the axis of pivoting (12).

4. A seat according to Claim 3 characterised in that the two extensions (17, 18) are transverse and each abut on an upper edge (20) of a part (2) supporting the rod (5).

5. A seat according to Claim 3 characterised in that the latch (23) comprises two lower extensions (24, 25) abutting on the bottom (2a) of a part (2) supporting the rod (5).

6. A seat according to Claim 2 characterised in that the fixing means comprise an extension (18a) of the latch (26) located behind the axis of pivoting (12) and held so as to rest on a portion (20) integral with the floor by a spring (27) connecting the latch and the frame (4).

7. A seat according to Claim 6 characterised in that a clip (28) fastened to the frame (4) near each recess (11) of the latter cooperates with the corresponding rod (5) so as to ensure that it is held at the bottom of this recess when the seat is resting on the floor, while allowing it to pass inside said recess by elastic deformation of the clip.

8. A seat according to any one of the preceding claims characterised in that the frame (4) and each latch (14; 23; 26) comprise means (21, 22; 23a, 23b, 4a,4b) for limiting the pivoting of the latch to two positions close to those which it occupies relative to the frame, when the seat is respectively in the usage position and the raised position.

9. A seat according to Claim 8 characterised in that the means for limiting the pivoting of the latch (14, 26) are constituted by a transverse pin (21) integral with the latter, engaged in an aperture made in an end plate (10) of the frame (4) to which the axis (12) of pivoting of the latch is fastened.

10. A seat according to Claim 8 characterised in that the means for limiting the pivoting of the latch (23) are constituted by two upper edges (23a, 23b) of the latter suitable for abutting against two flanges (4a, 4b) of an end plate (10) of the frame to which the axis (12) of pivoting of the latch is fastened.

## Patentansprüche

1. Fahrzeugsitz, dessen Sitzgestell (4) an seinem hinteren Teil über eine Befestigungsvorrichtung (7) am Fahrzeugboden verfügt, damit er in Gebrauchsstellung gehalten wird, und an seinem Vorderteil über zwei untere Aussparungen (11), die auf jeweils zwei im Boden verankerte Stangen (5) aufgelegt werden können, die eine Querachse zum Kippen des Sitzes zwischen seiner Gebrauchsstellung und einer vom Boden gelösten, angehobenen Stellung bilden, wobei ein an jeder Aussparung sitzender Riegel (14) über das Gestell schwenkt, der die entsprechende Stange fest in der Aussparung hält, dadurch gekennzeichnet, daß jeder Riegel (14,23,26) unter seinem Schwenkbolzen (12) eine auf diesen Bolzen (12) zentrierte, kreisbogenförmige Öffnung (15, 15a) sowie in deren Mitte eine untere Aussparung (16, 16a) aufweist, die geeignet sind, die entsprechende Stange (5) aufzunehmen, dergestalt, daß die Stange in einem der beiden Enden dieser Öffnung festsitzt, wenn der Sitz in Gebrauchsstellung oder angehobener Stellung steht, und gleichzeitig die Aussparungen (16, 11) des Riegels und des Gestells passieren kann, die sich gegenüberliegen, wenn der Sitz sich in Schrägstellung zwischen den beiden vorgenannten Positionen befindet.

2. Sitz gemäß Anspruch 1, dadurch gekennzeichnet, daß er mit Arretierungsvorrichtungen (17,18;18A,27,28) für die Riegel (14,23,26) ausgestattet ist, die eine Drehbewegung zum Boden ausführen, wenn der Sitz gekippt wird.

3. Sitz gemäß Anspruch 2, dadurch gekennzeichnet, daS die Arretierungsvorrichtungen aus zwei Erweiterungsteilen (17,18;24,25) jedes Riegels (14,23) bestehen, die jeweils vor und hinter dem Schwenkbolzen (12) an ein mit dem Boden zusammenhängendes Teil (20,2a) anschlagen.

4. Sitz gemäß Anspruch 3, dadurch gekennzeichnet, daß die beiden Erweiterungsteile (17,18) querliegen und jede an einen Oberrand (20) eines die Stange (5) haltenden Teils (2) anschlagen.

5. Sitz gemäß Anspruch 3, dadurch gekennzeichnet, daß der Riegel (23) über zwei untere Erweiterungsteile (24,25) verfügt, die an den Rand (2a) eines die Stange (5) haltenden Teils (2) anschlagen.

6. Sitz gemäß Anspruch 2, dadurch gekennzeichnet, daß die Arretierungsvorrichtung aus einem hinter dem Schwenkbolzen angebrachten Erweiterungsteil (18a) des Riegels (26) besteht, das durch eine den Riegel und das Gestell (4) zusammenhaltende Feder (27) auf ein mit dem Boden zusammenhängendes Teil (20) gedrückt wird.

7. Sitz gemäß Anspruch 6, dadurch gekennzeichnet, daß eine Klammer (28) an jeder Ausparung (11) des Gestells (4) befestigt wird, mit deren Hilfe die entsprechende Stange (5) fest in dieser Aussparung gehalten wird, wenn der Sitz auf dem Boden aufliegt, wobei die Klammer zum Passieren der Stange nachgibt.

8. Sitz gemäß einem der vorgenannten Ansprüche, dadurch gekennzeichnet, daß das Gestell (4) und jeder Riegel (14,23,26) mit Teilen (21,22,23a,23b,4a,4b) zur Begrenzung der Schwenkbewegung des Riegels ausgestattet sind, und zwar in zwei Positionen, die denen, die er zum Gestell einnimmt, wenn sich der Sitz in Gebrauchs- oder angehobener Stellung befindet, nahekommen.

9. Sitz gemäß Anspruch 8, dadurch gekennzeichnet, daß die Begrenzungsvorrichtung für das Schwenken des Riegels (14,26) aus einem querliegenden Finger (21) besteht, der mit letzterem ein zusammenhängendes Stück bildet und in eine Öffnung in einer Blende (10) des Gestells (4) faßt, an der der Schwenkbolzen (12) des Riegels befestigt ist.

10. Sitz gemäß Anspruch 8, dadurch gekennzeichnet, daß die Begrenzungsvorrichtung für den Riegel (23) in zwei Oberrändern (23a,23b) des Riegels besteht, die an zwei Randleisten (4a,4b) einer Blende (10) des Gestells anschlagen, an der der Schwenkbolzen (12) des Riegels befestigt ist.
